# EUROPEAN PATENT APPLICATION

(11) **EP 1 621 964 A1**
(43) Date of publication of application: **01.02.2006**
(21) Application number: 04017554.9
(22) Date of filing: 23.07.2004
(51) Int. Cl.: G06F 1/16

(54) **Notebook with a removable keyboard**

(71) Applicant: VAC Corporation, Taipei (TW)
(72) Inventor: Hua, Chung-Cheng, Taipei (TW)
(74) Representative: Viering, Jentschura & Partner

(57) **Abstract**

A notebook with a removable keyboard has a host, a keyboard, and a LCD display that is pivotally connecting with the host. The host has a frame, and a pair of upper and lower shells that are respectively mounted on the frame. The upper shell has an opening formed therein, a plurality of elastic hooks formed on a bottom of the upper shell, and a plurality of supporting boards formed on the bottom of the upper shell and protruding out of the opening. The keyboard has a main body, and a plurality of protrusions protruding from an edge of the main body for engaging with edges of the opening of the upper shell and the hooks.

## Description

### BACKGROUND OF THE INVENTION

### 1. Field of the Invention

The present invention relates to a notebook with a removable keyboard, and more particularly, to a keyboard assembled on a notebook by hooking so that the keyboard is easily removed from a shell of the notebook.

### 2. Description of the Related Art

The notebook has developed for several years and the hardware structure is developing toward assembling conveniently. The keyboard is conventionally assembled by screwing the keyboard to the shell of the notebook. However, the processes of the conventional method are very complex, and the screwing and removal processes are not convenient. Moreover, the keyboard must first be removed when removing other mechanisms of the notebook, such as the hard disk, CPU, or interference cards. The conventional method not only increases the inconvenience during maintenance, but also requires more time and cost.

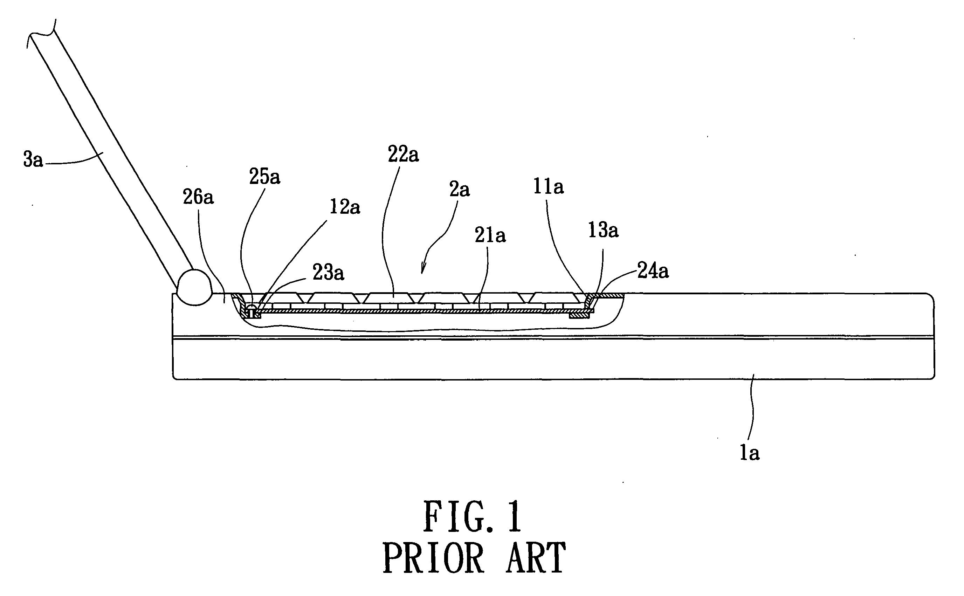

FIG. 1 is a perspective view of a notebook and a keyboard, which has a host shell 1a formed with a window opening 11a, a keyboard 2a mounted in the window opening 11a of the host shell 1a, and a LCD pivotally mounted on the notebook. The keyboard 2a has a board 21a and a plurality of keys 22a mounted on the board 21a. The keys 22a of the keyboard 2a are exposed by the window opening 11a after being mounted upwardly in the host shell 1a. The board 21a is formed with a plurality of screwing plates 23a on a bottom edge thereof, and a plurality of fixing plates 24a on an upper edge thereof The screwing plates 23a respectively extend into slots 12a formed in the host shell 1a. The fixing plates 24a are respectively embedded in positioning holes 13a formed in the host shell 1a. In the structure shown in FIG. 1, each of the screwing plates 23a is formed with a screwing hole and is attached to the host shell 1a with screws 25a. A cover shell 26a covers an upper edge of the host shell 1a.

However, an upgrade the CPU or other devices of the notebook, such as the hard disk, floppy disk, optical disk, or memory, must be performed by the factory or the vendor. Some of the devices can be upgraded by a user, but the user is limited by the way in which the keyboard is installed and cannot replace the devices in the notebook. In other words, the shell of the conventional notebook must be removed when upgrading the devices therein because of the way the keyboard is installed.

Therefore, the conventional keyboard assembling method of the notebook has a problem in failing to allow convenient upgrades, thereby bringing about a requirement to overcome the disadvantages of the prior art.

### SUMMARY OF THE INVENTION

It is therefore a main object of the invention to provide a notebook with a removable keyboard, which has an assembly structure that allows easy removal of the keyboard from the notebook in a short period for replacing or maintaining the inner devices of the notebook.

To achieve the above objects, the present invention provides a notebook with a removable keyboard that comprises a host, a keyboard, and a LCD display pivotally connecting with the host. The host has a frame, and a pair of upper and lower shells respectively mounted on the frame. The upper shell has an opening formed therein, a plurality of elastic hooks formed on a bottom of the upper shell, and a plurality of supporting boards formed on the bottom of the upper shell and protruding out of the opening. The keyboard has a main body, and a plurality of protrusions protruding from an edge of the main body for engaging with edges of the opening of the upper shell and the hooks.

To provide a further understanding of the invention, the following detailed description illustrates embodiments and examples of the invention, this detailed description being provided only for illustration of the invention.

### BRIEF DESCRIPTION OF THE DRAWINGS

The drawings included herein provide a further understanding of the invention. A brief introduction of the drawings is as follows:
FIG. 1 is a perspective view of a notebook with a cross-sectional view of a keyboard on the notebook according to the prior art;
FIG. 2 is an exploded top view of a notebook with a removable keyboard of the present invention;
FIG. 3 is an exploded bottom view of the notebook with a removable keyboard of the present invention;
FIG. 4 is an exploded cross-sectional view of the notebook with a removable keyboard of the present invention;
FIG. 5 is an assembly cioss-sectional view of the notebook with a removable keyboard of the present invention;
FIG. 5A is an enlarged view of area "A" of FIG. 5 of the notebook with a removable keyboard of the present invention; and
FIG. 6 is an assembly top view of the notebook with a removable keyboard of the present invention.

### DETAILED DESCRIPTION OF THE EMBODIMENTS

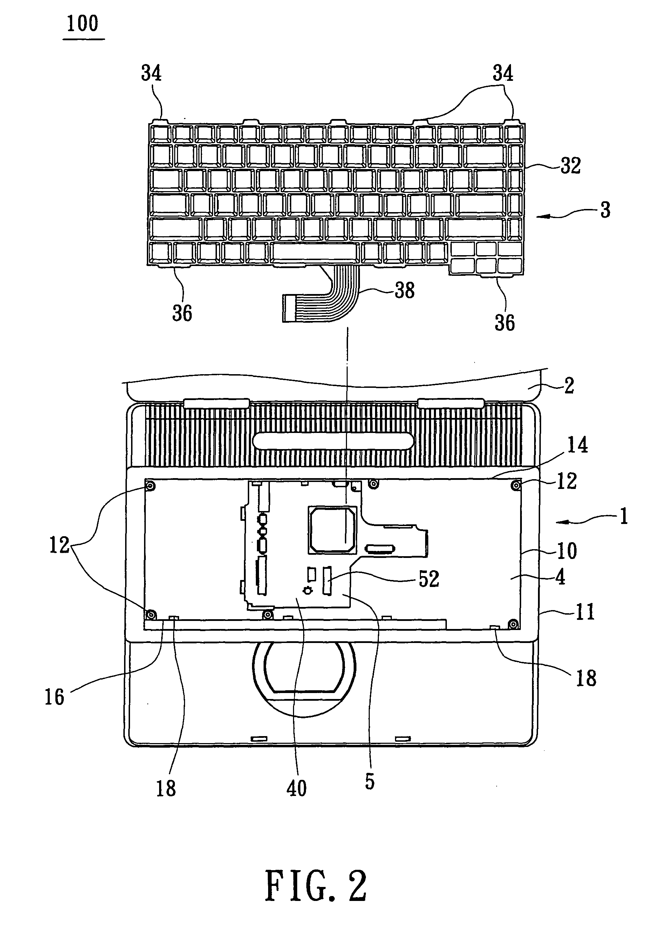

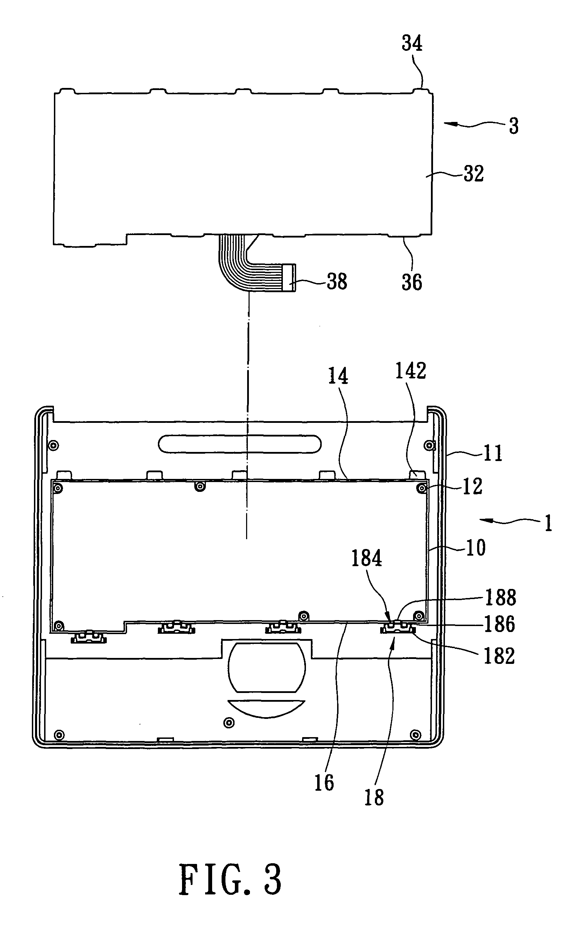

Referring now to FIGS. 2 to 3, the present invention provides a notebook with a removable keyboard. The notebook 100 with a removable keyboard comprises a host 1, a LCD display 2 pivotally connecting with the host 1, and a keyboard 3 mounted on the host 1.

The host 1 has a frame 4, and a pair of upper and lower shells 11,13 respectively mounted on the frame 4. The upper shell 11 has an opening 10 formed therein, and a plurality of supporting boards 12 are formed on the bottom surface thereof and protruding out the opening 10. The opening 10 has an upper edge 14 and a lower edge 16. The upper shell 11 is formed with a plurality of positioning slots 142 along the upper edge 14 of the opening 10. The upper shell 11 further comprises a plurality of elastic hooks 18 formed on the bottom of the upper shell 10 and protruding out the lower edge 16 of the opening 10. In this embodiment, the supporting boards 12 are respectively formed with a screwing hole for supporting the keyboard 3 and being screwed to the frame 4, so that the upper shell 11 is fixed on the frame 4. The frame 4 is formed with grooves corresponding to the supporting boards 12, so that a top surface of the supporting boards 12 is even with a top surface of the frame 4 for maintaining the flatness of the whole to support the keyboard 3.

Each elastic hook 18 of the upper shell 11 comprises a base portion 182 fixed on a bottom surface of the upper shell 11, an elastic arm 184 connecting with two ends of the base portion 182, and an engaging portion 188 formed on a middle portion of the elastic arm 184. The engaging portion 188 protrudes out of a lower edge of the opening 10 and is formed with a sliding surface on an upper portion thereof. The elastic arm 184 further comprises a pair of stretchable portions 186 respectively formed thereon and disposed on two sides of the engaging portion 188.

The keyboard 3 is engaged in the opening 10 of the upper shell 11. The keyboard 3 has a main body 32, a plurality of protrusions 34, 36 protruding from an edge of the main body 32, and a foldable cable 38 extending from a lower edge of the main body 32. The main body 32 has a contour mating with that of the opening 10 of the upper shell 11, and comprises a bottom metal plate and a plurality of keys assembled on the bottom plate and electrically connecting to the cable 38. The keys are conventional technology, and are not further described here. The protrusions 34 on the upper edges of the keyboard 3 are respectively engaged with the edges of the opening 10 of the upper shell 11 and positioned in the positioning slots 142. The protrusions 36 are mating with the hooks 18 and pressed by the hooks 18 between the hooks 18 and the supporting boards 12. In other words, the engaging portion 188 is protrudes out from the opening 10 to hold up the protrusions 34 of the keyboard 3.

The above-mentioned structure and position of the hooks 18 are the preferred embodiment of the present invention. The hooks 18 are elastic to allow engagement with the keyboard 3 and prevent the same from escaping. The embodiment of the invention is thus not limited to the hooks 18; an elastic tongue having a fixing end and a free end would also work. The fixing end is fixed on the bottom surface of the upper shell 11, and the free end as an engaging end protrudes from the opening 10. The hooks 18 also can be disposed along the upper edge of the opening 10. The keyboard 3 is assembled on the lower edge thereof and then pressed on the upper edge thereof for engaging with the hooks 18.

The frame 4 accommodates elements of the notebook 100. The frame 4 has a flat top board formed for supporting the keyboard 3. The supporting boards 12 also support upwardly the keyboard 3, so that the keyboard 3 operates well. The frame accommodates a motherboard 5, and the cable 38 of the keyboard 3 is electrically connected to the motherboard 5.

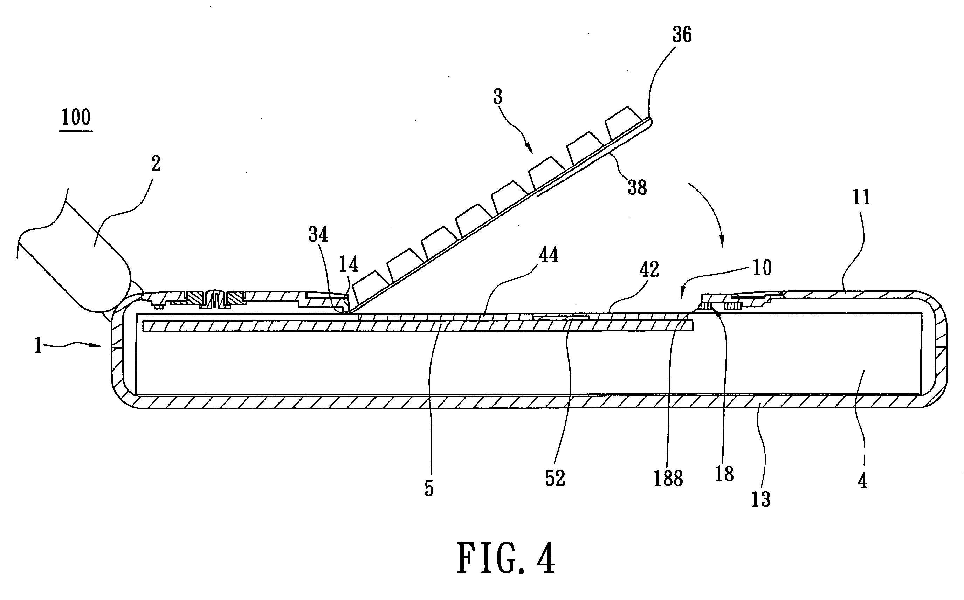

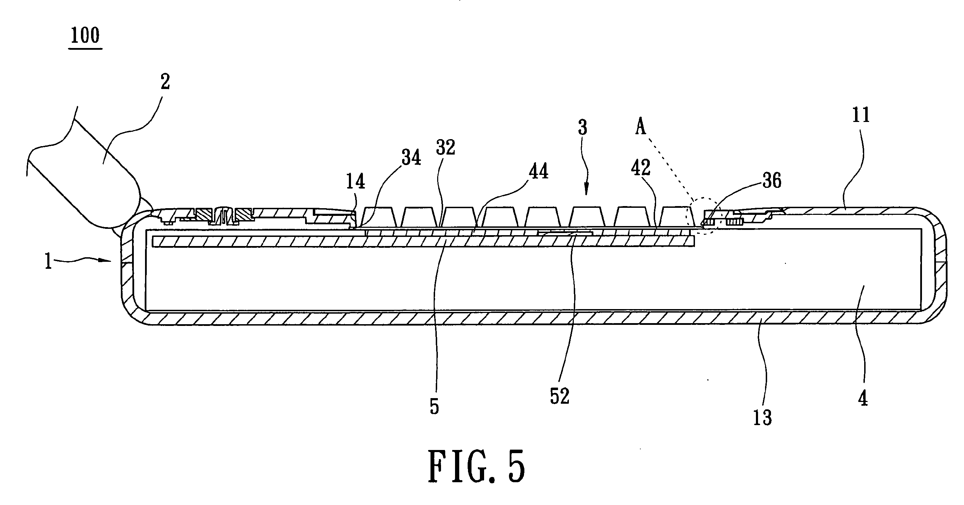

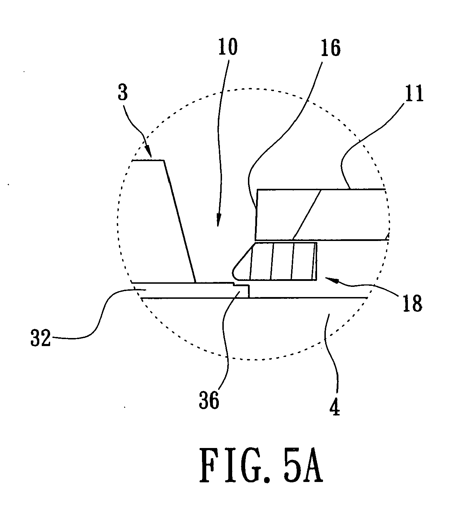

Referring to the FIGS. 4 and 5, exploded and assembly cross-sectional views of the notebook with a removable keyboard are shown. Also referring to FIG. 5A, an enlarged view of area "A" of FIG. 5 of the notebook with a removable keyboard is shown. The assembly steps of the present invention are described as follows. The keyboard 3 is slanted and inserted under the upper edge of the opening 10 of the upper shell 11. Then, the lower portion of the keyboard 3 is pressed to engage with the hooks 18 of the upper shell 11. The engaging portions 188 are pushed by the protrusions 36 of the keyboard 3 along the sliding surface on the upper portion thereof, and the protrusions 36 are engaged under the engaging portions 188. The assembly processes are very easy.

When assembling the keyboard 3, the protrusions 34 are engaged and positioned in the positioning slots 142 of the upper edge 14, and the protrusions 36 are engaged between the hooks 18 and the supporting boards 12.

The frame 4 is formed with an upward cutout 40, and the motherboard 5 received in the frame 4 has a socket connector 52 exposed in the cutout 40 for electrically connecting with the keyboard 3 via the foldable cable 38. Therefore, after removing the keyboard 3 from the upper shell 11, the cable 38 needs only to be pulled from the motherboard 5. The frame 4 further comprises an anti-EMI pad 42 (Anti- Electro Magnetic Interference pad) paved in the cutout 40. The anti-EMI pad 42 is made of metal plate for resisting electro magnetic interference. The frame 4 also has a cushion wafer 44 disposed under the anti-EIM pad 42 for reducing pressure from the keyboard 3. The cushion wafer 44 also can protect elements on the motherboard 5. Therefore, the top surface of the frame 4 is kept flat to support the keyboard 3 for operating well.

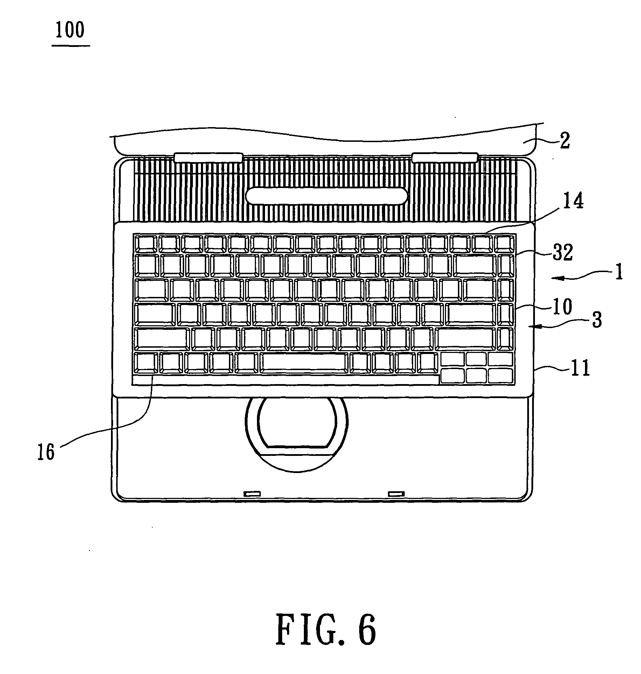

Referring to FIG. 6, an assembly top view of the notebook with a removable keyboard is shown. The notebook of the present invention 100 has the advantage of an easily removed keyboard 3, so that the maintenance of the notebook is very easy, and the replacement and upgrade of inner elements is convenient.

To remove the keyboard 3, a screwdriver is inserted into a slit between the keyboard 3 and the opening 10 for pushing the hooks 18. The bottom of the keyboard 3 is then separated from the upper shell 11 and the keyboard 3 pulled out. This process requires very little time.

The keyboard 3 is easily assembled on the upper shell 11 of the host 1. All of the engaging structures are hidden under the upper shell 11. The present invention has the advantages of easy disassembly, while remaining attractive in appearance. This point is important more marketability, and will affects the desire to buy.

A summary of the characteristics and advantages of the notebook with a modular frame, and especially the frame, is as follows:
1. The notebook of the present invention has keyboard that is removed very easily, so that the user maintains, replaces or upgrades the notebook very easily. The present invention reduces the time for disassembly and assembly.
2. The elements of the present invention are fewer than in the prior art, and the whole structure is simplified. The present invention reduces the cost and reduces the possibility of losing elements when performing maintenance.

There has thus been described a new, novel and heretofore unobvious notebook which eliminates the aforesaid problem in the prior art. Furthermore, those skilled in the art will readily appreciate that the above description is only illustrative of specific embodiments and examples of the invention. The invention should therefore cover various modifications and variations made to the herein-described structure and operations of the invention, provided they fall within the scope of the invention as defined in the following appended claims.

## Claims

1. A notebook with a removable keyboard, comprising:
a host, having a frame and upper and lower shells respectively mounted on the frame, wherein the upper shell has an opening formed therein, a plurality of elastic hooks formed on a bottom of the upper shell, and a plurality of supporting boards formed on the bottom of the upper shell and protruding out the opening;
a keyboard, having a main body, a plurality of protrusions protruding from an edge of the main body for engaging with edges of the opening in the upper shell and the hooks; and
a LCD display pivotally connecting with the host.

2. The notebook with a removable keyboard as in claim 1, wherein the protrusions of the keyboard respectively protrude from an upper edge and a lower edge of the main body.

3. The notebook with a removable keyboard as in claim 1, wherein the hooks of the upper shell are formed on a bottom of the lower edge of the opening of the upper shell, and wherein a bottom of the upper edge of the opening in the upper shell is formed with a plurality of position grooves.

4. The notebook with a removable keyboard as in claim 1, wherein the frame has a flat top board formed with an upward cutout, and a motherboard is received in the frame, the motherboard having a socket connector exposed by the cutout and electrically connecting with the keyboard via a foldable cable.

5. The notebook with a removable keyboard as in claim 4, wherein the frame further comprises an anti-EMI pad (Anti- Electro Magnetic Interference pad) paved in the cutout.

6. The notebook with a removable keyboard as in claim 1, wherein the supporting boards are respectively formed with a screwing hole for screwing the upper shell to the frame.

7. The notebook with a removable keyboard as in claim 1, wherein the elastic hooks of the upper shell are positioned adjacent to a lower edge of the opening.

8. The notebook with a removable keyboard as in claim 1, wherein each elastic hook of the upper shell comprises a base portion fixed on a bottom surface of the upper shell, an elastic arm connecting with two ends of the base portion, and an engaging portion formed on a middle portion of the elastic arm, and wherein the engaging portion protrudes out from a lower edge of the opening and holds up the protrusions of the keyboard.

9. The notebook with a removable keyboard as in claim 8, wherein the elastic arm further comprises a pair of stretchable portions respectively formed thereon and disposed on two sides of the engaging portion.

10. The notebook with a removable keyboard as in claim 9, wherein the engaging portion is formed with a sliding surface on an upper portion thereof.
